# EUROPÄISCHE PATENTANMELDUNG

(11) **EP 2 079 027 A1**
(43) Veröffentlichungstag der Anmeldung: **15.07.2009**
(21) Anmeldenummer: 08000393.2
(22) Anmeldetag: 10.01.2008
(51) Int. Cl.: G06F 11/36

(54) **Verfahren zum Betrieb eines Automatisierungsgerätes**

(71) Anmelder: SIEMENS AKTIENGESELLSCHAFT, 80333 München (DE)
(72) Erfinder: Graw, Roland, 76479 Steinmauern (DE)

(57) **Zusammenfassung**

Die Erfindung betrifft ein Verfahren zum Betrieb eines Automatisierungsgerätes (12), bei dem für von einer dadurch ausführbaren Automatisierungslösung (26) umfasste Programmcodeanweisungen (48) ein oder mehrere Unterbrechungspunkte (50) definierbar sind, die nur dann aktiv sind, also nur dann zu einer Unterbrechung der Ausführung der Automatisierungslösung (26) führen, wenn eine mit dem Unterbrechungspunkt (50) verknüpfte Aufrufspezifikation (60) einer Datenumgebung derjenigen Programmcodeanweisung (48) entspricht, der der Unterbrechungspunkt (50) zugeordnet ist.

## Beschreibung

Die Erfindung betrifft ein Verfahren zum Betrieb eines Automatisierungsgerätes, z. B. eines Automatisierungsgerätes oder eines Verbunds von Automatisierungsgeräten (Automatisierungssystem), wie dieses bzw. diese in an sich bekannter Art und Weise zur Steuerung und/oder Überwachung eines technischen Prozesses bestimmt und vorgesehen ist bzw. sind.

Verfahren zum Betrieb solcher Automatisierungsgeräte sind allgemein bekannt. Zum Beispiel umfasst ein Automatisierungsgerät einen Speicher, in den eine Automatisierungslösung ladbar ist oder in dem eine solche Automatisierungslösung vorgehalten wird. Die Automatisierungslösung definiert in an sich bekannter Art und Weise durch davon umfasste Programmcodeanweisungen Ausmaß und Umfang, in der das Automatisierungsgerät oder das Automatisierungssystem den jeweiligen technischen Prozess steuert, regelt und/oder überwacht.

Eine Automatisierungslösung kann einen erheblichen Umfang und eine damit einhergehende Komplexität annehmen. Üblicherweise umfasst eine Automatisierungslösung zumindest ein Anwenderprogramm. Dann sind die Begriffe "Automatisierungslösung" und "Anwenderprogramm" synonym. Die Automatisierungslösung kann auch eine Mehrzahl von parallel (bei mehreren Automatisierungsgeräten), quasi-parallel (bei nur einem Automatisierungsgerät) oder sequentiell ausgeführten Anwenderprogrammen umfassen. Bei der Ausführung der Automatisierungslösung durch eine Verarbeitungseinheit des Automatisierungsgerätes (oder mehrerer Automatisierungsgeräte) ergibt sich für von der Automatisierungslösung umfasste Funktionseinheiten (Funktionsbausteine, Routinen, Unterprogramme, Prozeduren, Interrupts, usw.) und wiederum davon umfasste Programmcodeanweisungen jeweils eine Datenumgebung. Eine solche Datenumgebung kann in Abhängigkeit von der Art des Aufrufs der Programmcodeanweisung, z. B. in einer Schleife oder nach bedingten oder unbedingten Sprüngen, oder der Art des Aufrufs der die Programmcodeanweisung umfassenden Funktionseinheit variieren, z. B. weil die Datenumgebung nicht nur globale Variable sondern auch lokale, temporäre Variable umfasst.

Ein einfaches Szenario, das die Problematik, die mit der Erfindung gelöst werden soll, illustriert, ist z. B. eine Schleifenfunktion, die für eine vorbestimmte Anzahl von Iterationen durchlaufen werden soll und wobei eine Analyse der Automatisierungslösung dann vorgenommen werden soll, wenn eine bestimmte Iteration erreicht ist. Bei bisherigen Lösungen ist es schon möglich, mit der betreffenden Programmcodeanweisung, also z. B. einer Programmzeile im Sourcecode oder einer Anweisung im Object- oder Maschinencode, einen Unterbrechungspunkt ("Breakpoint") zu verbinden. Dieser Unterbrechungspunkt führt aber nur dazu, dass bei jedem Erreichen der Programmcodeanweisung die Ausführung der Automatisierungslösung unterbrochen wird. Der Benutzer muss also immer nach Erreichen des Unterbrechungspunktes die Automatisierungslösung erneut starten, bis schließlich der gewünschte Iterationsschritt erreicht ist und die Analysen an der Automatisierungslösung vorgenommen werden können. Nachteilig ist dabei insbesondere, dass keine Echtzeitbedingungen mehr vorliegen und auch dynamische Fehler häufig nicht gefunden werden können.

Eine Aufgabe der Erfindung besteht entsprechend darin, ein Verfahren zum Betrieb eines Automatisierungsgerätes anzugeben, bei dem die oben genannten Nachteile vermieden oder zumindest deren Auswirkungen reduziert werden. Insbesondere besteht eine Aufgabe der Erfindung darin, ein Verfahren zum Betrieb eines Automatisierungsgerätes anzugeben, bei dem eine Analyse der Automatisierungslösung speziell für Anwendungsfälle, wie Fehlersuche, usw., dadurch erleichtert wird, dass einem Unterbrechungspunkt weitere Triggerbedingungen zuordenbar sind, so dass ein Unterbrechungspunkt nur dann aktiv wird, also der Ablauf der Automatisierungslösung nur dann unterbrochen wird, wenn ein bestimmtes, vorgegebenes oder vorgebbares Szenario vorliegt.

Diese Aufgabe wird erfindungsgemäß mit den Merkmalen des Anspruchs 1 gelöst. Soweit die Erfindung auch ein nach dem Verfahren arbeitendes Automatisierungsgerät betrifft, wird die Erfindung entsprechend auch mit einem Automatisierungsgerät gelöst, das eine Implementation dieses Verfahrens oder nachfolgend beschriebener Ausgestaltungen, z. B. in Software oder in einer Kombination in Hard- und/oder Software, umfasst.

Zum Betrieb eines Automatisierungsgerätes, das einen Speicher mit einer darin vorgehaltenen Automatisierungslösung umfasst, bei deren Ausführung durch eine Verarbeitungseinheit sich für jede von der Automatisierungslösung umfasste Programmcodeanweisung eine Datenumgebung ergibt und wobei zum Testen der Automatisierungslösung zumindest einer der Programmcodeanweisungen ein Unterbrechungspunkt zugeordnet wird, ist dabei vorgesehen, dass dem oder zumindest einem Unterbrechungspunkt eine sich auf die Datenumgebung derjenigen Programmcodeanweisung - im Folgenden als beobachtete Programmcodeanweisung bezeichnet -, welcher der Unterbrechungspunkt zugeordnet ist, beziehende Aufrufspezifikation zugeordnet wird und dass eine Ausführung der Automatisierungslösung bei Erreichen des Unterbrechungspunktes dann unterbrochen wird, wenn die Datenumgebung der beobachteten Programmcodeanweisung der dem Unterbrechungspunkt zugeordneten Aufrufspezifikation entspricht. Während sich die Datenumgebung während der Ausführung der Automatisierungslösung ständig ändert, kann mit der Aufrufspezifikation ein zu überwachendes Szenario (s.o.) vorgegeben werden, so dass bei Erreichen des Unterbrechungspunktes überprüft werden kann, ob ein momentanes Szenario, also die Datenumgebung, einem vorgegebenen oder vorgebbaren Szenario, also der Aufrufspezifikation, entspricht. Nur wenn dies gegeben ist, soll der Unterbrechungspunkt aktiv sein, also zu einer Unterbrechung der Ausführung der Automatisierungslösung führen.

Übertragen auf das eingangs gewählte Beispiel, bei dem eine Automatisierungslösung zur Analyse an einer speziellen Programmcodeanweisung dann unterbrochen werden soll, wenn diese während eines vorgegebenen oder vorgebbaren Iterationsschrittes ausgeführt wird, bedeutet dies, dass mit der Aufrufspezifikation angegeben wird, welcher Iterationsschritt interessiert, und bei jedem Erreichen der beobachteten Programmcodeanweisung dessen Datenumgebung, die auch Informationen hinsichtlich des Iterationsschrittes umfasst - z. B. durch den Inhalt einer für die Iteration verwendeten Zählervariablen -, die Datenumgebung oder der davon relevante Teil mit der Aufrufspezifikation verglichen wird. Immer dann, wenn die Datenumgebung und die Aufrufspezifikation übereinstimmen, wenn also im hier gewählten Beispiel der gewünschte Iterationsschritt erreicht ist, wird der Unterbrechungspunkt aktiviert und die Automatisierungslösung bei Erreichen der beobachteten Programmcodeanweisung unterbrochen.

Der Vorteil der Erfindung besteht darin, dass mit der Aufrufspezifikation eine weitere Triggerbedingung oder eine Mehrzahl von Triggerbedingungen zur Aktivierung eines Unterbrechungspunktes zur Verfügung steht. Bisher beruht eine Aktivierung eines Unterbrechungspunktes darauf, dass die jeweilige Programmcodeanweisung bei der Ausführung der Automatisierungslösung erreicht wird. Mit dem durch die Aufrufspezifikation definierbaren Szenario kann ein Unterbrechungspunkt um weitere Bedingungen zur Steuerung von dessen Wirksamkeit ergänzt werden.

Solange also die Aufrufspezifikation mit der Datenumgebung nicht übereinstimmt, ist der Unterbrechungspunkt inaktiv. Erst wenn die Datenumgebung der beobachteten Programmcodeanweisung der dieser zugeordneten Aufrufspezifikation entspricht, wird der Unterbrechungspunkt aktiv und führt entsprechend bei einer Ausführung der Automatisierungslösung zu einer Unterbrechung der Ausführung und zu einer Möglichkeit zur Analyse der Automatisierungslösung an der betreffenden Stelle.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Wenn sich die Datenumgebung auf Inhalte eines Lokaldatenstacks für eine Funktionseinheit, welche die beobachtete Programmcodeanweisung umfasst, bezieht, besteht die Möglichkeit, in die Aufrufspezifikation auch solche Daten einzubeziehen, die sich nur als temporäre Daten entlang eines speziellen Aufrufpfads, ausgehend von einer ersten Funktionseinheit zu derjenigen Funktionseinheit, die die beobachtete Programmcodeanweisung umfasst, ergeben. Dann kann die Aktivierung eines Unterbrechungspunktes auch abhängig gemacht werden von Konstellationen, die durch Daten repräsentiert sind, die an grundsätzlich beliebiger Stelle der Automatisierungslösung definiert wurden. Zur Unterscheidung wird im Folgenden diejenige Funktionseinheit, welche die beobachtete Programmcodeanweisung umfasst, als beobachtete Funktionseinheit bezeichnet. Für eine solche beobachtete Funktionseinheit ist es, wenn die Datenumgebung Inhalte eines Lokaldatenstacks umfasst oder sich auf solche Inhalte bezieht, möglich, die Aktivierung des Unterbrechungspunktes davon abhängig zu machen, von welcher Funktionseinheit die beobachtete Funktionseinheit aufgerufen wird, denn die Aufrufhierarchie oder entlang der Aufrufhierarchie angelegte oder veränderte Daten ist bzw. sind am Inhalt des Lokaldatenstacks ersichtlich.

So kann eine erste aufrufende Funktionseinheit im Rahmen des bei deren Aufruf erzeugten Gültigkeitsbereichs eine Instanziierung eines ersten Satzes lokaler Variablen umfassen, während sich für eine andere aufrufende Funktionseinheit ein anderer Satz lokaler Variablen ergibt. Die jeweiligen lokalen Variablen gehören zum Lokaldatenstack oder sind über diesen erreichbar, so dass auch anhand der von aufrufenden Funktionseinheiten definierten Variablen eine Aktivierung des Unterbrechungspunktes möglich ist.

Eine für eine Fehlersuche in Automatisierungslösungen besonders hilfreiche Ausführungsform der Erfindung besteht darin, dass sich die Datenumgebung auf Eingangsparameter und/oder Ausgangsparameter der beobachteten Funktionseinheit bezieht. Dann kann der Unterbrechungspunkt in Abhängigkeit des Wertes bestimmter Ein- und/oder Ausgangsparameter aktiviert werden. Für eine Funktionseinheit, die z. B. eine Umschaltung zwischen einem Automatikbetrieb, einem Handbetrieb und einem Einrichtbetrieb implementiert, kann die jeweils anzunehmende oder angenommene Betriebsart durch einen Ein- und/oder Ausgangsparameter kodiert sein, so dass, wenn eine Untersuchung der Automatisierungslösung nur während der Betriebsart Einrichtbetrieb vorgesehen ist, eine diesbezügliche Aufrufspezifikation vorgegeben werden kann und sich im Betrieb der Automatisierungslösung beim Vergleich von Datenumgebung und Aufrufspezifikation eine Aktivierung des Unterbrechungspunktes nur dann ergibt, wenn der betreffende Ein- und/oder Ausgabeparameter die Betriebsart Einrichtbetrieb kodiert.

Das oben skizzierte und nachfolgend weiter beschriebene Verfahren wird bevorzugt als Computerprogramm implementiert, so dass die Erfindung auch ein solches Computerprogramm mit durch einen Computer ausführbaren Programmcodeanweisungen betrifft. In diesem Zusammenhang betrifft die Erfindung ebenfalls ein Computerprogrammprodukt, also z. B. einen Datenträger, ein Speichermedium und dergleichen, mit einem durch einen Computer ausführbaren derartigen Computerprogramm, wobei hier als Computer speziell ein Automatisierungsgerät, also z. B. ein Programmier- oder Bediengerät in Betracht kommt, so dass die Erfindung schließlich auch ein Automatisierungsgerät mit einem solchen Computerprogrammprodukt oder mit einem solchen Computerprogramm oder einer Implementation des eingangs skizzierten und nachfolgend weiter beschriebenen Verfahrens betrifft.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die z. B. durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Prüf- und Arbeitsverfahren betreffen.

### Darin zeigen

- FIG 1: eine schematisch vereinfachte Darstellung eines Automatisierungssystems,
- FIG 2: eine schematisch vereinfachte Darstellung eines durch das Automatisierungssystem ausführbaren Anwenderprogramms mit davon umfassten Funktions-
einheiten,
- FIG 3 und 4: schematisch vereinfachte Darstellungen für eine Funktionseinheit mit einem Unterbrechungspunkt.

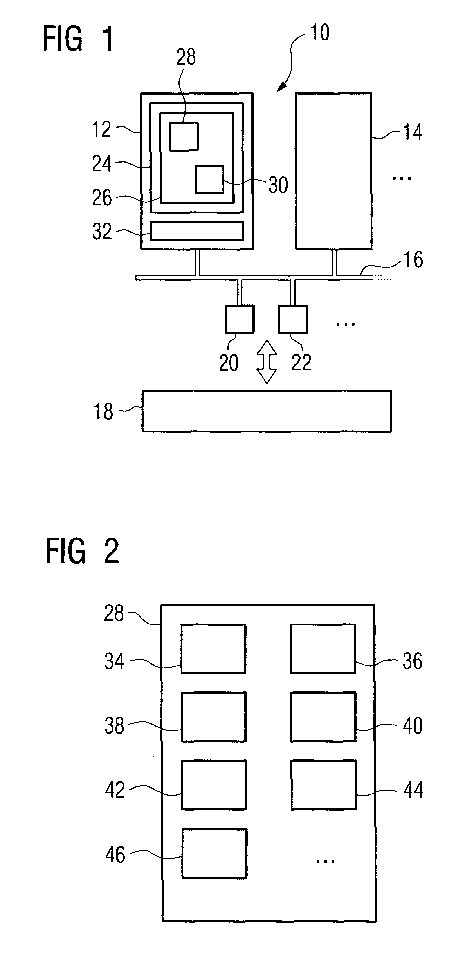

FIG 1 zeigt in schematisch vereinfachter Darstellung ein Automatisierungssystem 10, das zumindest ein Automatisierungsgerät 12 und ggf. weitere Automatisierungsgeräte 14 umfasst. Bei einer Mehrzahl von Automatisierungsgeräten 12, 14 sind diese in an sich bekannter Art kommunikativ, z. B. über einen Bus 16, miteinander und mit zur Steuerung und/oder Überwachung eines nicht näher dargestellten technischen Prozesses 18 vorgesehener Prozessperipherie 20, 22 verbunden. Das oder jedes Automatisierungsgerät 12, 14 umfasst zumindest einen Speicher 24, in dem eine Automatisierungslösung 26, durch welche Art und Umfang der Steuerung, Regelung oder Überwachung des technischen Prozesses 18 durch das Automatisierungssystem 10 oder das Automatisierungsgerät 12 näher definiert ist, vorgehalten wird.

Eines der Automatisierungsgeräte 12, 14 kann dabei als Programmiergerät fungieren, auf dem das Verfahren gemäß der Erfindung oder bevorzugter Ausführungsformen implementiert ist. Ansonsten besteht auch die Möglichkeit, dass ein nicht dargestelltes Programmiergerät in an sich bekannter Art und Weise temporär mit dem Automatisierungssystem 10 verbunden wird, z. B. über den Bus 16.

Die Automatisierungslösung 26 umfasst zumindest ein Anwenderprogramm 28, 30 mit benutzerspezifischen Vorgaben für die Steuerung, Regelung oder Überwachung des technischen Prozesses 18, also ein anwendungsspezifisches Steuerprogramm. Zur Ausführung der Automatisierungslösung 26, insbesondere des oder jedes davon umfassten Anwenderprogramms 28, 30, ist in an sich bekannter Art und Weise eine Verarbeitungseinheit 32, z. B. ein Prozessor oder dergleichen, vorgesehen.

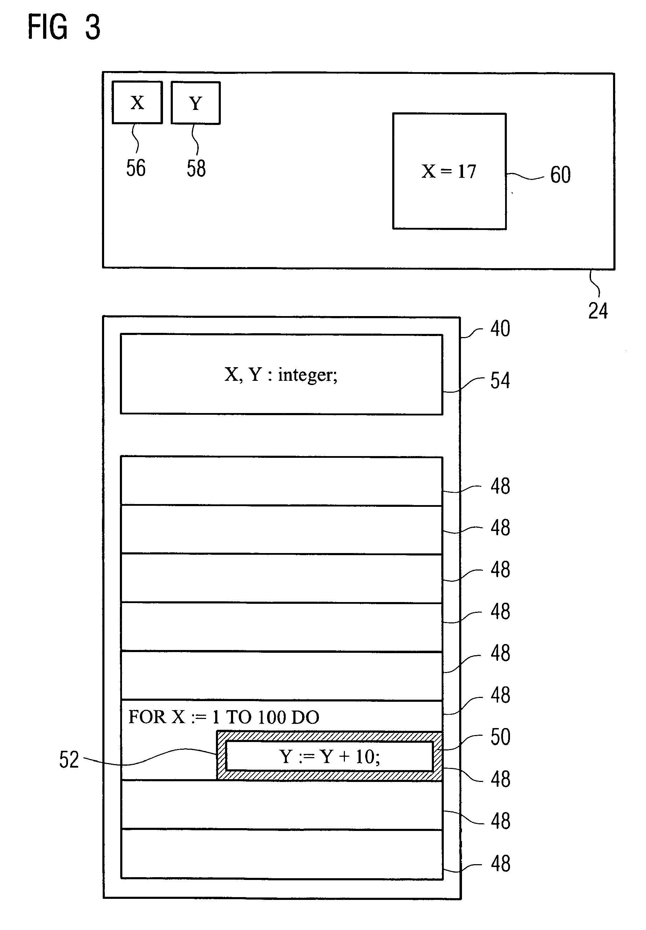

FIG 2 zeigt eine schematisch vereinfachte, exemplarische Darstellung des Anwenderprogramms 28 aus FIG 1. Danach umfasst das Anwenderprogramm 28 eine Anzahl von Funktionseinheiten 34, 36, 38, 40, 42, 44, 46, wobei Größe, Anordnung und Verteilung der dargestellten Funktionseinheiten 34-46 bei der schematischen Darstellung in FIG 2 ohne Belang sind. Bei den Funktionseinheiten 34-46 handelt es sich um Organisationsformen der von dem Anwenderprogramm 28 umfassten Programmcodeanweisungen 48 (FIG 3). Jede Funktionseinheit 34-46 stellt quasi ein Programm innerhalb des Anwenderprogramms 28 dar und wird entsprechend häufig auch als Unterprogramm, Funktion, Routine oder dergleichen bezeichnet. Hier und im Folgenden wird der Begriff "Funktionseinheit" als Oberbegriff für alle Organisationsformen der vorstehend genannten Art von Programmcodeanweisungen 48 innerhalb eines Anwenderprogramms 28 verwendet. Bei Automatisierungsgeräten 12, 14 üblicherweise verwendete Programmierumgebungen bezeichnen solche Funktionseinheiten 34-46 auch als Bausteine, insbesondere Funktionsbausteine. Entsprechend werden die Begriffe "Baustein" und "Funktionseinheit" ggf. synonym verwendet.

FIG 3 zeigt in schematisch vereinfachter Form eine der Funktionseinheiten 34-46 gemäß FIG 2. Diese Funktionseinheit umfasst eine Mehrzahl von Programmcodeanweisungen 48. Einer dieser Programmcodeanweisungen 48 ist ein Unterbrechungspunkt 50 (dargestellt durch die Schraffur) zugeordnet. Zur Unterscheidung von den anderen Programmcodeanweisungen 48 wird diese Programmcodeanweisung als beobachtete Programmcodeanweisung 52 bezeichnet. Entsprechend wird die in FIG 3 dargestellte Funktionseinheit, die exemplarisch für jede beliebige von dem Anwenderprogramm 28 umfasste Funktionseinheit 34-46 steht, als beobachtete Funktionseinheit 40 bezeichnet.

Jede Funktionseinheit 34-46 und damit auch die beobachtete Funktionseinheit 40 umfasst einen Datenteil 54, der im Einzelfall auch leer sein kann. Im dargestellten Beispiel werden in dem Datenteil zwei Variable ("X", "Y") definiert. In dem Speicher 24 des jeweiligen Automatisierungsgerätes 12, 14 wird für jede auf diese Art definierte Variable eine Speicherzelle 56, 58 (temporär) reserviert. Der Datenteil 54, aufgrund dessen reservierte Speicherzellen 56, 58, aber auch die einer beobachteten Programmcodeanweisung 52 vorangehenden oder, z. B. im Falle von rückwärts gerichteten Sprüngen, auch nachfolgenden Programmcodeanweisungen 48 definieren eine graphisch nicht darstellbare Datenumgebung für die beobachtete Programmcodeanweisung 52. Der Begriff "Datenumgebung" meint hier und im Folgenden die Gesamtheit der bei Ausführung der beobachteten Programmcodeanweisung 52 gültigen Daten, also globale und lokale Daten aber z. B. keine lokalen Daten, die in einem Datenteil 54 einer anderen Funktionseinheit 34-46 definiert werden, die aus der beobachteten Funktionseinheit 40 aufgerufen wird (nicht dargestellt). Beim in FIG 3 dargestellten Szenario gehören zumindest die Variablen "X" und "Y" zu der Datenumgebung. Wenn jetzt der der beobachteten Programmcodeanweisung 52 zugeordnete Unterbrechungspunkt 50 dann und nur dann aktiv sein soll, also eine Ausführung der Automatisierungslösung unterbrechen soll, wenn z. B. die Variable "X" den Wert siebzehn oder die Variable "Y" den Wert zweihundert annimmt, kann dies in einer im Speicher 24 vorgehaltenen Aufrufspezifikation 60 hinterlegt werden, z. B. als "X = 17" oder "Y = 200". Bei Erreichen der beobachteten Programmcodeanweisung 52 wird entsprechend des Verfahrens also überprüft, ob die Aufrufspezifikation 60 der Datenumgebung entspricht. Sobald die für die iterative Ausführung der beobachteten Programmcodeanweisung 52 maßgebliche Variable "X" im angenommenen Fall den Wert siebzehn erreicht hat, wird der Unterbrechungspunkt 50 aktiv und die Ausführung der Automatisierungslösung 26 unterbrochen.

Für die Aufrufspezifikation 60 kommen grundsätzlich beliebige Kombinationen einer Mehrzahl von Daten in Betracht. Abhängig von einem Startwert der Variablen "Y" kann eine Konstellation vorkommen, bei der die Variable "X" den Wert siebzehn hat und die Variable "Y" den Wert zweihundert. Die Aufrufspezifikation 60 kann dann eine diesbezügliche Definition eines Triggerkriteriums, z. B. in Form von "(X = 17) UND (Y = 200)" umfassen. Weitere Kombinationen logischer, binärer, arithmetischer, usw. Operationen sowie die Hinzunahme weiterer Daten sind in gleicher Art und Weise möglich.

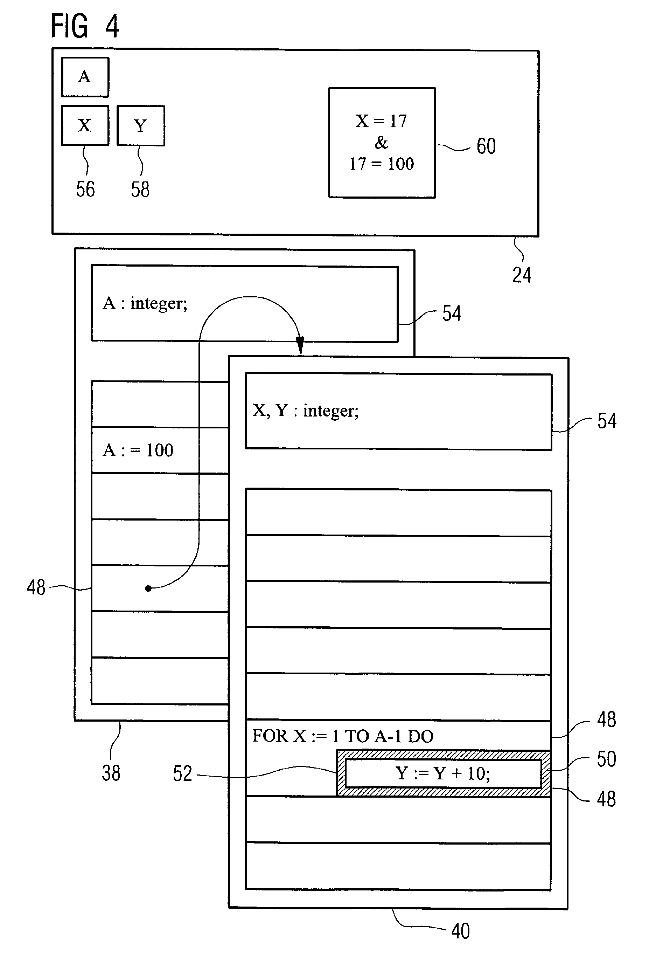

FIG 4 zeigt nun im Gegensatz zu FIG 3 ein geringfügig abgewandeltes Szenario. Dargestellt ist eine Situation, bei der die beobachtete Funktionseinheit 40 von einer Programmcodeanweisung 48 von einer anderen Funktionseinheit aufgerufen wird. Diese andere Funktionseinheit wird zur Unterscheidung als aufrufende Funktionseinheit 38 bezeichnet. Die aufrufende Funktionseinheit 38 hat einen eigenen Datenteil 54, in dem lokale Variablen, hier die Variable "A", definiert werden können. Ob die Variable "A" der beobachteten Funktionseinheit 40 als Eingangsparameter übergeben wird oder ob diese Variable für die beobachtete Funktionseinheit 40 schlicht aufgrund der normalen Gültigkeitsbedingungen erreichbar ist, spielt vorliegend nur eine untergeordnete Rolle. Wichtig ist, dass auch in Datenteilen 54 aufrufender Funktionseinheiten 38 definierte Variable zur Datenumgebung der beobachteten Programmcodeanweisung 52 gehören. Die Aufrufspezifikation 60 kann sich also auch auf Variable beziehen, die in aufrufenden Funktionseinheiten 38 definiert sind, so dass der Unterbrechungspunkt 50 z. B. dann nicht aktiv wird, wenn die beobachtete Funktionseinheit 40 nicht aus derjenigen Funktionseinheit 38 aufgerufen wird, die die in der Aufrufspezifikation 60 angegebene Variable definiert oder mit dem in der Aufrufspezifikation 60 angegebenen Wert versorgt hat.

Auf diese Art und Weise ergibt sich eine Möglichkeit, die Aktivierung des Unterbrechungspunktes 50 auch von einer Aufrufreihenfolge der von der Automatisierungslösung 26 umfassten Funktionseinheiten 34-46 abhängig zu machen.

Spezielle, zur Datenumgebung gehörige Variable einer Funktionseinheit 34-46 sind Eingangsparameter oder Ausgangsparameter der jeweiligen Funktionseinheit 34-46. Ein- und Ausgangsparameter von Funktionseinheiten sind an sich bekannt und sind hier wegen der, soweit die Erfindung betroffen ist, weitgehenden Vergleichbarkeit mit den bereits dargestellten lokalen Variablen ("X", "Y") oder globalen oder zumindest in Bezug auf die beobachtete Funktionseinheit globalen Variablen ("A") nicht separat dargestellt.

Genau wie für die in FIG 3 oder FIG 4 in den dortigen Datenteilen 54 dargestellten lokalen Variablen kann die Aufrufspezifikation 60 auch einzelne oder mehrere Ein- oder Ausgangsparameter umfassen, ggf. in logischer Verknüpfung mit einzelnen oder mehreren lokal für einzelne Funktionseinheiten 34-46 definierten Variablen. Die vom Anwender erstellte Aufrufspezifikation 60 wird dem Automatisierungsgerät 12 oder dem davon umfassten Computerprogramm zur Implementierung des hier beschriebenen Verfahrens, z. B. einem so genannten Debugger, in einem speziellen Beschreibungsformat mit einer vorgegebenen oder vorgebbaren Syntax zur Verfügung gestellt. Bevorzugt basiert das Beschreibungsformat auf einer textuellen Darstellung der Aufrufspezifikation 60, so dass diese mit der weit überwiegenden Mehrzahl erhältlicher Editoren erzeugt werden kann. Es ist auch möglich, die Aufrufspezifikation 60 aus einer speziellen Testsituation heraus gleichsam automatisch zu generieren, indem z. B. während der Ausführung des Debuggers entweder die jeweilige Datenumgebung als Aufrufspezifikation 60 gespeichert wird oder indem in der jeweiligen Datenumgebung einzelne Daten für eine Übernahme in eine zu speichernde Aufrufspezifikation 60 ausgewählt werden.

Beim Ausführen der Automatisierungslösung 26 sind die jeweils adressierten Daten, also die Datenumgebung für die jeweils zu einem bestimmten Zeitpunkt ausgeführte Programmcodeanweisung 48, zumindest teilweise Bestandteil eines so genannten, an sich bekannten Lokaldatenstacks. Jede Lokalvariable (vergleiche Variablen "X", "Y", "A"; FIG 3, 4) einer Funktionseinheit 34-46 hat einen definierten, so genannten Offset innerhalb des Lokaldatenstacks, bezogen auf ein funktionseinheitenspezifisches Stackelement. Dieses Stackelement wird referenziert durch ein zubehöriges Call-Stack-Element, welches eine Rücksprungadresse der Funktionseinheit enthält. Zur Entscheidung, ob im Betrieb ein Unterbrechungspunkt 50 aktiv oder inaktiv ist, wird die Aufrufspezifikation 60 mit den Daten der jeweiligen Datenumgebung, also bedarfsweise mit dem Inhalt des Lokaldatenstacks, verglichen. Wenn sich also die Aufrufspezifikation 60 zumindest teilweise auf lokale Variable oder Daten bezieht, erfolgt der Vergleich anhand des Lokaldatenstacks. Soweit sich die Aufrufspezifikation auf globale Variable oder Daten bezieht, erfolgt der Vergleich anhand des Inhalts eines jeweils adressierten Teils des Speichers 24. Die Aufrufspezifikation 60 kann dafür (nicht dargestellt) auch Typenspezifikationen umfassen, um eine zusätzliche Flexibilität oder Mächtigkeit der Definition einer Gültigkeit oder Ungültigkeit eines Unterbrechungspunktes 50 zu erhalten.

Zusammenfassend lässt sich die vorliegende Erfindung damit kurz wie folgt beschreiben: Es wird ein Verfahren zum Betrieb eines Automatisierungsgerätes 12 angegeben, bei dem für von einer dadurch ausführbaren Automatisierungslösung 26 umfasste Programmcodeanweisungen 48 ein oder mehrere Unterbrechungspunkte 50 definierbar sind, die nur dann aktiv sind, also nur dann zu einer Unterbrechung der Ausführung der Automatisierungslösung 26 führen, wenn eine mit dem Unterbrechungspunkt 50 verknüpfte, vorgebbare Aufrufspezifikation 60 einer Datenumgebung derjenigen Programmcodeanweisung 48 entspricht, der der Unterbrechungspunkt 50 zugeordnet ist.

## Patentansprüche

1. Verfahren zum Betrieb eines Automatisierungsgerätes (12) mit einem Speicher (24) und einer darin vorgehaltenen Automatisierungslösung (26),
bei deren Ausführung durch eine Verarbeitungseinheit (32) des Automatisierungsgerätes (12) sich für jede von der Automatisierungslösung (26) umfasste Programmcodeanweisung (48) eine Datenumgebung ergibt und
wobei zum Testen der Automatisierungslösung (26) zumindest einer der Programmcodeanweisungen ein Unterbrechungspunkt (50) zugeordnet wird,
**dadurch gekennzeichnet, dass** dem oder zumindest einem Unterbrechungspunkt (50) eine sich auf die Datenumgebung derjenigen Programmcodeanweisung, welcher der Unterbrechungspunkt (50) zugeordnet ist - beobachtete Programmcodeanweisung (52) -, beziehende Aufrufspezifikation zugeordnet wird und dass eine Ausführung der Automatisierungslösung (26) bei Erreichen des Unterbrechungspunktes (50) dann unterbrochen wird, wenn die Datenumgebung der beobachteten Programmcodeanweisung (52) der dem Unterbrechungspunkt (50) zugeordneten Aufrufspezifikation entspricht.

2. Verfahren nach Anspruch 1,
wobei die Datenumgebung sich auf Inhalte eines Lokaldatenstacks für eine Funktionseinheit, welche die beobachtete Programmcodeanweisung (52) umfasst - beobachtete Funktionseinheit (40) -, und/oder eine oder mehrere, die beobachtete Funktionseinheit (40) aufrufende Funktionseinheiten (38) bezieht.

3. Verfahren nach Anspruch 2,
wobei die Datenumgebung sich auf Eingangsparameter und/oder Ausgangsparameter der beobachteten Funktionseinheit (40) und/oder einer oder mehrerer aufrufender Funktionseinheiten (38) bezieht.

4. Verfahren nach einem der Ansprüche 1 bis 3,
wobei die Datenumgebung logische Verknüpfungen umfasst.

5. Computerprogramm mit durch einen Computer ausführbaren Programmcodeanweisungen (48) zur Implementierung des Verfahrens nach einem der Ansprüche 1 bis 4, wenn das Computerprogramm auf einem Computer, insbesondere einem Automatisierungsgerät (12), ausgeführt wird.

6. Computerprogrammprodukt, insbesondere Speichermedium, mit einem durch einen Computer, insbesondere ein Automatisierungsgerät (12), ausführbaren Computerprogramm gemäß Anspruch 5.

7. Automatisierungsgerät (12) mit einem Computerprogrammprodukt gemäß Anspruch 6.
